# EUROPÄISCHE PATENTSCHRIFT

(11) **EP 0 569 613 B1**
(45) Veröffentlichungstag und Bekanntmachung des Hinweises auf die Patenterteilung: **10.04.1996**
(21) Anmeldenummer: 92108253.3
(22) Anmeldetag: 15.05.1992
(51) Int. Cl.: G01D 5/14, G01P 3/488

(54) **Anordnung zur berührungsfreien Erfassung der Drehzahl oder Position eines drehbaren Geberteils**
Device for non-contact establishment of rotary position or speed
Dispositif pour établir sans contact la position ou la vitesse angulaire

(43) Veröffentlichungstag der Anmeldung: 18.11.1993
(73) Patentinhaber: SIEMENS AKTIENGESELLSCHAFT, D-80333 München (DE)
(72) Erfinder: Schiefer, Peter, Dipl.-Ing.(FH), W-8000 München (DE)

(56) Entgegenhaltungen:
- EP-A- 0 490 266
- EP-A- 0 496 918
- DE-A- 3 339 162
- US-A- 3 849 724
- US-A- 4 901 015
- SIEMENS COMPONENTS Bd. 20, Nr. 4, August 1985, München DE, Seite 174, "KSY 20 - Differential Hall probe for position sensing"

## Beschreibung

Die Erfindung betrifft eine Anordnung zur berührungsfreien Erfassung der Drehzahl oder Position eines drehbaren Geberteils.

Solche Anordnungen sind für eine Vielzahl von Anwendungen bekannt, so z.B. in der Automobilelektronik für die Positionserfassung der Kurbel- oder Nockenwelle oder für die Drehzahlermittlung einer Brennkraftmaschine.

Dazu sind mit der Kurbelwelle oder der Nockenwelle entsprechende Geberteile mit ferromagnetischen Zähnen oder Segmenten verbunden. Ein Abtastkopf tastet diese Zähne ab und liefert beim Vorbeilauf jedes solchen Zahns oder Segments ein Impulssignal. Aus diesen Impulssignalen können dann die entsprechenden Positions- oder Drehzahlinformationen abgeleitet werden.

Als Abtastkopf werden Anordnungen mit zwei Sensoren verwendet. Die beiden Sensoren sind dabei, in Laufrichtung der Zähne gesehen, im Abstand hintereinander angeordnet. Dementsprechend wird bei einem ankommenden Zahn zuerst einer der beiden Sensoren ansprechen, während der andere noch nicht anspricht. Umgekehrt wird, wenn der Zahn vorbeigelaufen ist, der zuerst erreichte Sensor schon nicht mehr ansprechen, während der später erreichte Sensor noch anspricht. Eine Auswerteeinheit bildet aus den beiden Sensorsignalen ein Differenzsignal und kann daraus die ansteigende und abfallende Flanke jedes Zahnes erkennen. Durch diese Differenzsignalauswertung können Störeinflüsse kompensiert werden.

Die Auswerteeinheit liefert ein Signal, solange ein Differenzsignal vorliegt. Ist daher eine Lücke oder ein Zahn länger als der Abstand der beiden Sensoren voneinander, so liegt kein Differenzsignal vor, solange beide Sensoren denselben Zahn oder dieselbe Lücke abtasten. Dies ist z.B. der Fall bei Nockenwellengebern, die nur ein über die Hälfte ihres Umfangs erstrecktes Segment und sonst eine Lücke aufweisen. Die bekannte Anordnung kann an diesem Nockenwellengeber jeweils nur den Übergang Zahn/Lücke bzw. Lücke/Zahn erfassen. Beim Nockenwellengeber muß aber die Aussage möglich sein, ob dem Abtastkopf gerade der Zahn oder die Lücke gegenüber steht.

Daher wurde in der EP-A-0 496 918 (Art. 54(3,4)EPÜ) vorgeschlagen, die beiden Sensoren in Laufrichtung der Zähne nebeneinander einzuordnen und das Geberteil so auszubilden, daß immer dem einen Sensor ein Zahn gegenüber steht, wenn dem anderen Sensor eine Lücke gegenüber steht und umgekehrt. Dies bedingt eine komplizierte Ausbildung des Geberteils (z.B. zwei Zahnräder nebeneinander) und eine aufwendige Auswertung des Differenzsignals beider Sensoren nach deren Vorzeichen.

Die Aufgabe der vorliegenden Erfindung besteht daher darin, eine Anordnung zur berührungsfreien Erfassung der Drehzahl oder Position eines drehbaren Geberteils zu finden, welche die Verwendung eines einfachen Geberteils ermöglicht und dabei sowohl bei drehendem als auch bei stillstehendem Geberteil auf einfache Weise die Aussage zuläßt, ob dem Abtastkopf ein Zahn bzw. Segment oder eine Lücke gegenübersteht.

Diese Aufgabe wird erfindungsgemäß durch die im Patentspruch angegebenen Merkmale gelöst.

Die Erfindung wird im folgenden anhand eines in der Zeichnung dargestellten Ausführungsbeispiels näher erläutert.

Es zeigen:
- Figur 1: die Zuordnung eines Abtastkopfes mit zwei Sensoren zu einem Segment-Geberteil und
- Figur 2: die von dieser Anordnung gewonnenen Signale.

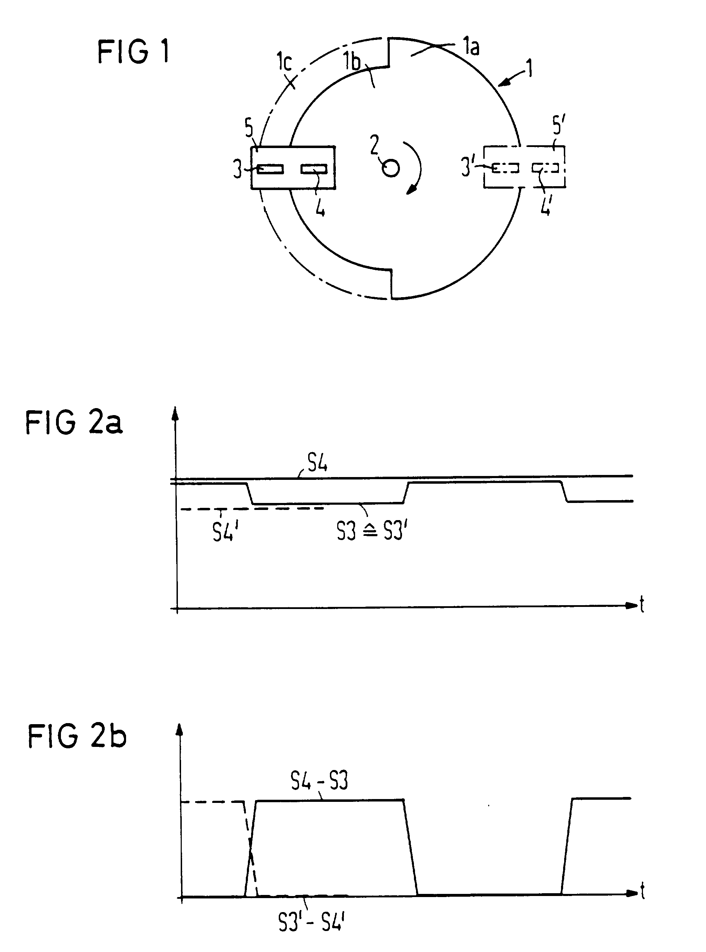

In Figur 1 ist eine Anordnung zur berührungsfreien Erfassung der Drehzahl oder Position eines mit einem Segment 1a von 180° versehenen Segment-Geberteils 1, welches um eine Achse 2 drehbar gelagert ist, dargestellt. Neben diesem Segment-Geberteil 1, in axialer Richtung gesehen, ist ein Abtastkopf 5 drehfest befestigt, auf welchem zwei Hallsensoren 3, 4 in radialer Richtung (bezogen auf den drehbaren Geberteil 1) hintereinander so angeordnet sind, daß der eine Hallsensor 3 abwechselnd das Segment 1a und die Lücke 1c des drehenden Geberteils 1 abtastet, während der andere Hallsensor 4 den homogenen Teil 1b des Geberteils abtastet. Als homogener Teil 1b ist derjenige Teil des Geberteils 1 zu verstehen, der beim Vorbeidrehen am Hallsensor 4 keine Lücken aufweist, so daß der Hallsensor ausschließlich ferromagnetisches Material abtastet und ein im wesentlichen konstantes Ausgangssignal S4 abgibt.

Die Ausgangssignale S3 und S4 der beiden Hallsensoren 3 und 4 über der Zeit t sind in Figur 2a dargestellt. Während das Signal S3 im wesentlichen mit einer von der Drehgeschwindigkeit des Geberteils 1 abhängigen Periodendauer rechteckförmig über der Zeit t verläuft, wobei die niedrigere Amplitude beim Abtasten der Lücke 1c und die höhere Amplitude beim Abtasten des Segments 1a entsteht (oder umgekehrt, je nach Art der Auswerteschaltung), hat das Signal S4 im wesentlichen eine konstante Amplitude, die dem Abtasten des homogenen, ferromagnetischen Teils 1b des Geberteils 1 entspricht.

Die verstärkte Differenz S4 - S3 beider Signale ist in Figur 2b dargestellt, woraus ersichtlich ist, daß beim Abtasten des Segments das Differenzsignal im wesentlichen den Wert Null hat (da beide Sensoren gleichzeitig ferromagnetisches Material abtasten), beim Abtasten der Lücke jedoch einen von Null verschiedenen Wert (weil der eine Sensor ferromagnetisches Material abtastet, während der andere Sensor gegen Luft mißt), so daß aus diesen beiden unterschiedlichen Signalamplituden geschlossen werden kann, ob dem Abtastkopf gerade ein Zahn bzw. Segment oder eine Lücke gegenüber steht. Dies gilt sowohl für statische (Geberteil steht still) als auch für dynamische Messungen (Geberteil rotiert).

Es ist selbstverständlich auch möglich, den Abtastkopf um den gegenseitigen Abstand der beiden Hallsensoren 3 und 4 radial nach außen zu verschieben, wie in Figur 1 dargestellt (gestrichelt eingezeichneter Abtastkopf 5'mit den beiden Hallsensoren 3' und 4'), wobei dann der eine Hallsensor 3' wieder die Zähne bzw. Segmente 1a und Lücken 1c des Geberteils 1 abtastet, der andere Hallsensor 4' jedoch radial so weit außerhalb des Geberteils 1 liegt, daß er auf dessen ferromagnetisches Material nicht mehr anspricht und konstant gegen Luft mißt. Infolge dessen entspricht das Ausgangssignal S3' des Hallsensors 3' dem Signal S3 von Figur 2a, während das Ausgangssignal S4' wieder eine konstante, jedoch kleinere Amplitude als das Ausgangssignal S4 aufweist, da ja jetzt ständig gegen Luft gemessen wird (in Figur 2a gestrichelt dargestellt). Die verstärkte Differenz S3'- S4' in Figur 2b gestrichelt dargestellt, entspricht dann dem invertierten Signal S4 - S3. Auch bei dieser Anordnung der Hallsensoren kann aus den beiden unterschiedlichen Signalamplituden des Differenzsignals ermittelt werden, ob dem Abtastkopf bzw. den Sensoren gerade ein Zahn bzw. Segment oder eine Lücke gegenüber steht.

## Patentansprüche

1. Anordnung zur berührungsfreien Erfassung der Drehzahl oder Position eines mit Zähnen oder wenigstens einem Segment (1a) versehenen, um eine Achse (2) drehbaren Geberteils (1) aus ferromagnetischem Material, mittels **eines Differential-Hallgebers mit** zwei drehfest angeordneten Hallsensoren (3, 4), wobei der eine Hallsensor (3) die Zähne bzw. Segmente (1a) und Lükken (1c) des Geberteils (1) abtastet, und der andere Hallsensor (4) permanent den homogenen Teil (1b) des Geberteils abtastet oder permanent gegen Luft mißt.

## Claims

1. Arrangement for identifying, in a contactless fashion, the rotational speed or position of a sensor component (1) which is provided with teeth or at least one segment (1a), can rotate about an axis (2) and is made from ferromagnetic material, by means of a differential Hall sensor with two Hall sensors (3, 4) which are arranged fixed in terms of rotation, the one Hall sensor (3) scanning the teeth or segments (1a) and gaps (1c) of the sensor component (1), and the other Hall sensor (4) permanently scanning the homogeneous part (1b) of the sensor component or permanently measuring against air.

## Revendications

1. Dispositif pour détecter, sans contact, la vitesse de rotation ou la position d'un élément détectable (1) équipé de dents ou d'au moins un segment (1a) et pouvant tourner autour d'un axe (2) et réalisé en un matériau ferromagnétique, à l'aide d'un détecteur différentiel de Hall comportant deux capteurs de Hall (3,4) montés sans rotation possible, un capteur de Hall (3) explorant les dents ou segments (1a) et les intervalles vides (1c) de l'élément détectable (1), et l'autre capteur de Hall (4) explorant en permanence la partie homogène (1b) de l'élément détectable ou effectuant en permanence une mesure par rapport à l'air.
